# NEUE EUROPÄISCHE PATENTSCHRIFT

(11) **EP 2 391 659 B2**
(45) Veröffentlichungstag und Bekanntmachung des Hinweises auf die Entscheidung über den Einspruch: **24.05.2017**
(45) Hinweis auf die Patenterteilung: 14.11.2012
(21) Anmeldenummer: 10700326.1
(22) Anmeldetag: 12.01.2010
(51) Int. Cl.: C08F 220/18

(54) **VERNETZBARE, IN WASSER REDISPERGIERBARE POLYMERPULVERZUSAMMENSETZUNG**
CROSS-LINKABLE, IN WATER REDISPERSIBLE POLYMER POWDER COMPOUND
COMPOSITION PULVÉRULENTE POLYMÈRE RÉTICULABLE, REDISPERSIBLE DANS L'EAU

(30) Priorität: 02.02.2009 DE 102009000537
(43) Veröffentlichungstag der Anmeldung: 07.12.2011
(73) Patentinhaber: Wacker Chemie AG, 81737 München (DE)
(72) Erfinder: FAATZ, Michael, 84489 Burghausen (DE); HÄRZSCHEL, Reinhard, 84489 Burghausen (DE)
(74) Vertreter: Schuderer, Michael
(86) Internationale Anmeldenummer: PCT/EP2010/050285
(87) Internationale Veröffentlichungsnummer: WO 2010/086217

(56) Entgegenhaltungen:
- DE-A1- 10 004 319
- US-A- 3 652 723

## Beschreibung

Die Erfindung betrifft eine vernetzbare, in Wasser redispergierbare Polymerpulver-Zusammensetzung, Verfahren zu deren Herstellung, sowie deren Verwendung.

In Wasser redispergierbare Polymerpulver - (Re)Dispersionspulver- werden durch Trocknung der entsprechenden wässrigen Polymerdispersionen, in Gegenwart einer Trocknungshilfe (im Allgemeinen ein Schutzkolloid), erhalten. Aufgrund des Schutz-kolloidanteils wird zum Einen beim Trocknungsvorgang verhindert, dass die Polymerteilchen irreversibel verkleben, da die Polymerteilchen von den wasserlöslichen Schutzkolloid-Teilchen umhüllt werden. Zum Anderen bewirkt diese Schutzkolloid-Matrix, welche sich beim Dispergieren des Polymerpulvers in Wasser wieder auflöst, dass die Polymerpartikel wieder mit der Partikelgröße der Ausgangsdispersion in der wässrigen Dispersion vorliegen.

Derartige Dispersionspulver werden in vielerlei Anwendungen eingesetzt, beispielsweise in Beschichtungsmittel, in Klebemittel für die unterschiedlichsten Substrate. Am verbreitetsten ist deren Anwendung in bauchemischen Produkten, häufig in Verbindung mit hydraulischen Bindemitteln. Beispiele hierfür sind Baukleber insbesondere Fliesenkleber, Putze und Mörtelmassen, Farben, Spachtelmassen, Verlaufsmassen, Wärmedämmverbundsysteme und Fugenmörtel. Der Vorteil der Dispersionspulver liegt vor allem in der Möglichkeit sie in vorgefertigten, lagerfähigen Trockenmischungen, gegebenenfalls zusammen mit hydraulischen Bindemitteln wie Zement, einzusetzen, und erst unmittelbar vor der Verwendung durch Zugabe von Wasser gebrauchsfertig zu machen. Derartige Trockenmischungen können gegenüber pastösen Systemen leichter transportiert werden (ohne Wasseranteil) und bieten Vorteile bei der Lagerung.

Der Einsatz von Dispersionspulvern dient vor allem der Verbesserung der mechanischen Festigkeit und der Haftung von damit modifizierten Mörtelmassen bei Verfilmung der Polymerteilchen. Es ist bekannt, zur weiteren Verbesserung der mechanischen Festigkeit, Polymerfilme zu vernetzen.

Aus der US-A 4028294 ist bekannt, vernetzbare Polymerlatices herzustellen, indem ein Epoxidharz im Gemisch mit Monomer bei der Emulsionspolymerisation eingesetzt wird. Zum Erhalt eines vernetzbaren Systems wird darüberhinaus noch in Gegenwart von epoxyreaktiven Comonomeren polymerisiert, welche mit dem Epoxidharz vernetzende Gruppen tragen. Angeblich tritt bei den für die Polymerisation gewählten Temperaturen keine vorzeitige Vernetzung ein. Die Herstellung von in Wasser redispergierbaren Polymerpulver-Zusammensetzungen wird nicht beschrieben. Die US-A 4108819 beschreibt die Copolymerisation von Vinylacetat und Ethylen in Gegenwart eines Epoxidharzes. Zur Verhinderung einer vorzeitigen Vernetzung wird der pH während der Polymerisation bei pH 3 bis pH 7 gehalten. Der fertigen Dispersion wird dann ein Aminohärter zugegeben. Nachteilig bei diesen Verfahren ist die Gefahr der vorzeitigen Vernetzung, da sowohl Epoxidgruppen als auch Aminohärter in der wässrigen Dispersion vorliegen und daher während der Lagerung zumindest teilweise vernetzen. Die Herstellung von in Wasser redispergierbaren Polymerpulver-Zusammensetzungen wird nicht beschrieben. In der US 6235811 B1 wird zur Herstellung von wässrigen Dispersionen von epoximodifizierten Vinylacetat-(Co)polymerisaten so vorgegangen, dass ein Vinylacetat-(Co)polymerlatex mit dem flüssigen Epoxidharz oder einer wässrigen Lösung des Epoxidharzes vermischt wird, und anschließend flüssiges Isophorondiamin zugegeben wird. Auch hier liegen Epoxidharz und Aminvernetzer nebeneinander in flüssiger Phase vor, was zu vorzeitiger Vernetzung bei längerer Lagerung führt. Die DE 2601200 beschreibt eine wässrige Vinylacetat-Ethylen-Copolymer-Dispersion, welche durch Polymerisation in Gegenwart eines Epoxidharzes erhalten wurde, und welche mit einem Aminvernetzer versetzt wird. Da die reaktiven Komponenten nebeneinander in wässriger Phase vorliegen, neigen solche Systeme zu vorzeitiger Vernetzung. In der US-A 4690988 werden polymermodifizierte, vinylisierte Epoxidharze dadurch erhalten, dass ein Polyepoxid zunächst mit einer ethylenisch ungesättigten Carbonsäure umgesetzt wird und in Gegenwart des vinylisierten Epoxidharzes weitere Monomere polymerisiert werden (vinylfunctional chain-extending monomers). Die Vernetzung der damit erhaltenen Polymerisate erfolgt durch Zugabe von (Hydro)peroxiden. Eine vorzeitige Vernetzung ist bei solchen Systemen nur schwerlich auszuschließen.

Ein vernetzbares Dispersionspulver wird gemäß US 2001/0024644 A1 durch Copolymerisation von ethylenisch ungesättigten Monomeren und epoxidfunktionellen Monomeren in wässrigem Medium, Trocknung der Dispersion und nachträgliche Zugabe von Polyepoxid erhalten. Nachteilig ist, dass die Vernetzungseffizienz hier relativ niedrig ist. Die EP 0896029 A1 beschreibt ein Verfahren, bei welchem ethylenisch ungesättigte Monomere mit Comonomeren, welche vernetzbare Gruppen enthalten, copolymerisiert werden, die Dispersion getrocknet wird, und anschließend Feststoffteilchen zügemischt werden, welche funktionale Gruppen tragen, die mit den vernetzbaren Gruppen des Copolymers vernetzen können. Aus der EP-A 723975 A1 ist ein Dispersionspulver bekannt, welches durch Copolymerisation von Styrol und/oder (Meth)acrylsäureestern mit epoxidfunktionellen Comonomeren erhalten wird. Nachteilig bei diesen Verfahren ist die Gefahr der vorzeitigen Vernetzung bei Polymerisation in Gegenwart von vernetzbaren Comonomere. Aus der EP 721004 A2 sind Polymerpulverzusammensetzungen bekannt, welche Polymerpulver enthalten und pulverförmige, vernetzende Komponenten, welche dadurch erhalten werden, dass die jeweiligen Flüssigkeiten auf einen pulverförmigen Träger aufgetragen werden. Die pulverförmigen Komponenten werden dann miteinander vermischt. Nachteilig ist dabei das Handling eines solchen 3-Komponenten-Systems und die mangelhafte Redispergierbarkeit solcher Mischungen.

Es bestand daher die Aufgabe, eine Polymer-Zusammensetzung zur Verfügung zu stellen, die insbesondere beim Einsatz in bauchemischen Produkten auch ohne Zusatz von mineralischen Bindemitteln zu wasserfesten Filmen führt, und bei deren Herstellung und Lagerung die vorzeitige Vernetzung wirksam verhindert wird.

Gegenstand der Erfindung ist eine vernetzbare, in Wasser redispergierbare Polymerpulver-Zusammensetzung erhältlich mittels radikalisch initiierter Polymerisation in wässrigem Medium von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, wobei keine epoxidfunktionellen Comonomere copolymerisiert werden, und anschließender Trocknung der dabei erhaltenen Polymerdispersion, dadurch gekennzeichnet, dass vor der Trocknung der damit erhaltenen Polymerdispersion, ein Epoxidharz zugegeben wird, und gegebenenfalls nach der Trocknung ein mit dem Epoxidharz vernetzender Härter zugegeben wird.

Unter Epoxidharz sind nicht radikalisch polymerisierbare Epoxidverbindungen mit mindestens zwei Epoxidgruppen pro Molekül zu verstehen. Die Epoxidverbindungen können aliphatischer, araliphatischer oder aromatischer Natur sein. Beispielsweise Epoxidverbindungen vom Bisphenol-A-Typ, das heißt Kondensationsprodukte von Bisphenol-A und Epichlorhydrin oder Methylepichlorhydrin. Geeignet sind auch Epoxidharze auf Basis von Bisphenol-F, welche im allgemeinen eine Mischung von Bisglycidyloxyphenylmethanen enthalten. Weitere Beispiele sind aliphatische Epoxidverbindungen wie Glycidylether von aliphatischen Polyolen, insbesondere der Butyldiglycidylether; cycloaliphatische Epoxidharze wie Vinylcyclohexandioxid, Dicyclopentadiendioxid und 3,4-Epoxy-6-methyl-cyclohexyl-methyl; und heterocyclische Epoxidverbindungen wie Triglycidyl-Isoc,yanurat. Derartige Epoxidharze sind im Handel erhältlich, beispielsweise die Bisphenol-A- und Bisphenol-F-Typen als Epilox^{R}-Harze. Bevorzugt werden die Epoxidharze vom Bisphenol-A-Typ und Bisphenol-F-Typ. Die Epoxidharze werden in einer Menge von 1 bis 50 Gew.-%, vorzugsweise 5 bis 30 Ges.-%, jeweils bezogen auf das Gesamtgewicht der zur Polymerisation eingesetzten Monomere, eingesetzt.

Geeignete mit dem Epoxidharz vernetzende Härter sind solche, welche bei der Verarbeitungstemperatur von bauchemischen Produkten, im Regelfall die Umgebungstemperatur, im Allgemeinen bei Temperaturen zwischen 0°C und 40°C, mit dem Epoxidharz vernetzen. Bevorzugt werden mit dem Epoxidharz vernetzende Amine. Besonders bevorzugte Amine sind solche mit zwei öder mehr Aminogruppen, beispielsweise aliphatische Polyamine, Polyoxyalkylenamine, Polyethylehimine, Aminosilane und deren Kondensationsprodukte, aminofunktionelle Polyvinylalkohole. Am meisten bevorzugt werden aliphatische Polyamine, welche unter den Handelsnamen Anquamine^{R} bzw. Epilink^{R} oder Epilox^{R}-Härter erhältlich sind, oder Polyoxyalkylenamine, welche unter den Handelsnamen Jeffamine^{R} erhältlich sind, oder Polyethylenimine, welche unter dem Handelsnamen Polyimin erhältlich sind. Am meisten bevorzugt werden auch Aminosilane und deren Kondensationsprodukte. Geeignete Aminosilane sind beispielsweise die unter dem Handelsnamen Geniosil^{R} erhältlichen, wie N-(2-Aminoethyl)(3-Aminopropyl)-trimethoxysilan (Geniosil GF 91), (3-Aminopropyl) triethoxysilan (Geniosil GF 93), N-(2-Aminoethyl)(3-Aminopropyl)methyldimethoxysilan (Geniosil GF 95).

Die vernetzenden Härter können zu der mit Epoxidharz modifizierten, in Wasser redispergierbaren Polymer-pulver-Zusammensetzung als Flüssigkeit zugegeben werden, vorzugsweise werden die vernetzenden Härter als Pulver appliziert. Wenn die Härter bei Normalbedingungen (DIN 50014 23/50) als Flüssigkeit vorliegen, wird der Härter daher vorzugsweise auf ein pulverförmiges Trägermaterial aufgetragen oder mittels Schutzkolloid, beispielsweise Polyvinylalkohol, verkapselt, und in dieser Form eingesetzt.

Geeignete pulverförmige Trägermaterialien sind dem Fachmann bekannt, beispielsweise Siliciumoxide wie Kieselgel oder Kieselsäure (beispielsweise Sipernat^{R}22), Tone, Titandioxide, Calciumcarbonat, Kunststoffharze wie Siliconharze. Die Auftragung kann mittels bekannter Verfahren erfolgen: Die flüssigen Härter können mit dem pulverförmigen Träger vermischt werden, wobei dann pulverförmige Partikel von mit Härter beschichtetem Träger resultieren. Hochviskose Härter können unter Scherung mit dem pulverförmigen Trägermaterial vermischt werden, beispielsweise in einer Retschmühle, um pulverförmige, mit Härter beschichtete Träger zu erhalten.

Zur Mikroverkapselung mit Schutzkolloid werden die Härter mit einer wässrigen Lösung des Schutzkolloids vermischt und anschließend das Wasser entfernt, beispielsweise mittels Walzen- oder Sprühtrocknung.

Die Einsatzmenge der mit dem Epoxidharz vernetzenden Härter hängt vom molaren Verhältnis der Epoxidgruppen zu den funktionellen Gruppen des Härters, vorzugsweise Aminogruppen, in der Polymerpulver-Zusammensetzung ab. Im Allgemeinen werden die Epoxid-haltigen Pulver und die Härter in einem solchen Mengenverhältnis eingesetzt, dass das molare Verhältnis von Epoxidgruppen zu den funktionellen Gruppen des Härters von 0,5 bis 2,0 beträgt.

Für die Herstellung des Basispolymerisats, der vernetzbaren und in Wasser redispergierbaren Polymerpulver-Zusammensetzung, geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen (Vinylversatate), beispielsweise VeoVa9^{R} oder VeoValo^{R} (Händelsnamen der Firma Resolution). Besonders bevorzugt ist Vinylacetat. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, Butylacrylat (n-, iso-, tert.-), n-Butylmethacrylat, 2-Ethylhexylacrylat, Norbornylacrylat. Bevorzugt sind Methylacrylat, Methylmethacrylat, Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0,05 bis 10 Gew.-%, vorzugsweise 0,05 bis < 2 Gew.-%, besonders bevorzugt 0,05 bis 1. Gew.-%, jeweils bezogen auf das Gesamtgewicht des Basispolymerisats, Hilfsmonomere copolymerisiert werden. Am meisten bevorzugt werden keine der unten genannten Hilfsmonomere, insbesondere keine ethylenisch ungesättigten Mono- oder Dicarbonsäuren, copolymerisiert. Wesentlich ist, dass keine epoxidfunktionellen Comonomere zur Herstellung des Basispolymerisats copolymerisiert werden.

Beispiele für Hilfsmonomere sind ethylenisch ungesättigte Mono- und Dicarbonsäuren, ethylenisch ungesättigte Carbonsäureamide und -nitrile, Mono- und Diester der Fumarsäure und Maleinsäure, sowie Maleinsäureanhydrid, ethylenisch ungesättigte Sulfonsäuren wie Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Weitere Beispiele sind siliciumfunktionelle Comonomere, wie Acryloxypropyltri(alkoxy)- und Methacryloxypropyl-tri(alkoxy)-Silane, Vinyltrialkoxysilane und Vinylmethyldialkoxysilane.

Beispiele für geeignete Basispolymerisate, der vernetzbaren und in Wasser redispergierbaren Polymerpulver-Zusammensetzung, sind Polymerisate, welche erhalten werden mittels Polymerisation von Vinylacetat, Mischpolymerisation von Vinylacetat mit Ethylen, Mischpolymerisation von Vinylacetat mit Ethylen und einem oder mehreren weiteren Vinylestern wie Vinylversatat oder Vinyllaurat, Mischpolymerisation von Vinylchlorid mit Ethylen, Mischpolymerisation von Vinylchlorid und Ethylen und einem oder mehreren Vinylestern wie Vinylacetat und Vinyllaurat, Mischpolymerisation von Vinylacetat mit Ethylen und einem oder mehreren Acrylsäureester, Homo- und Mischpolymerisation von (Meth)-acrylsäureestern, Mischpolymerisation von Styrol mit einem oder mehreren Acrylsäureestern, Mischpolymerisation von Styrol mit 1,3-Butadien, wobei gegebenenfalls jeweils noch Hilfsnionomere copolymerisiert werden können.

Bevorzugt werden Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie vinylpropionat, Vinyllaurat, Vinylester von alpha-verzweigten Carbonsäuren mit 9 bis 13 C-Atomen (Vinylversatate) wie VeoVa9^{R}, VeoVa10^{R}, VeoVa11^{R}; Mischpolymerisate von Vinylacetat, 1 bis 40 Gew.-% Ethylen und vorzugsweise 1 bis 60 Gew.-% (Meth)Acrylsäureester von unverzweigten oder verzweigten Alkoholen mit 1 bis 15 C-Atomen, insbesondere Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten öder verzweigten Alkoholen mit 1 bis 15 C-Atomen, insbesondere Methylmethacrylat, Butylacrylat oder 2-Ethylhexylacrylat, welche noch 1 bis 40 Gew.-% Ethylen enthalten; Mischpolymerisate mit Vinylacetat und/oder einem oder mehreren weiteren Comonomeren aus der Gruppe Vinylester mit 1 bis 12 C-Atomen im Carbonsäurerest, und 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von Butylacrylat oder 2-Ethylhexylacrylat oder Copolymerisate von Methylmethacrylat mit Butylacrylat und/oder 2-Ethylhexylacrylat und gegebenenfalls Ethylen; Styrol-Acrylsäureester-Copolymerisate mit Styrol und einem oder mehreren Monomeren aus der Gruppe Methylacrylat, Ethylacrylat, Propylacrylat, Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswaht bzw. die Auswahl der Gewichtsanteile der Comonomere erfolgt dabei so, dass im allgemeinen eine Glasübergangstemperatur Tg von -50°C bis +50°C, vorzugsweise -30°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgh die Glasübergangstemperatur in Kelvin des Homopolymeren des Monomeren n ist. Tg-Werte für Homopolymerisate sind in Polymer Handbook 2nd Edition, J.Wiley & Sons, New York (1975) aufgeführt.

Die Polymerisation zur Herstellung der Basispolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,001 bis 0,02 Gew.-%, vorzugsweise 0,001 bis 0,01 Ges.-%, jeweils bezogen auf das Gesamtgewicht der Monomere, eingesetzt.

Als Redox-Initiatoren verwendet man Kombinationen aus den genannten Initiatoren mit Reduktionsmitteln. Geeignete Reduktionsmittel sind die Sulfite und Bisulfite der Alkalimetalle und von Ammonium, beispielsweise Natriumsulfit, die Derivate der Sulföxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnd Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanze sind n-Dodecylmercaptan, tert.-Dodecylmercaptan, Mercaptopropionsäure, Mercaptopropionsäuremethylester, Isopropanol und Azetaldehyd.

Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Geplatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höppler-viskosität, in 4 %-iger wässriger Lösung, von 3 bis 25 mPas

(Methode nach Höppler bei 20°C, DIN 53015). Am meisten bevorzugt werden auch die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester unter den Bezeichnungen Ve0Va^{R}5, VeoVa^{R}9, VeoVa^{R}10 und VeoVa^{R}11 angeboten werden. Weitere am meisten bevorzugte Polyvinylalkohole sind teilverseifte, hydrophobierte Polyvinylacetate, die durch polymeranaloge Umsetzung, beispielsweise Acetalisierung der Vinylaikoholeinheiten mit C₁- bis C₄-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höppler-viskosität (DIN 53015, Methode nach Höppler, 4 %-ige wässrige Lösung) von 1 bis 30 mPas, vorzugsweise 2 bis 25 mPas. Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monorhermenge. Vorzugsweise werden keine Emulgatoren eingesetzt. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylpheriolen, oder nichtionische Tenside wie Alkylpolyglykolether oder Alkylarylpolyglykolether mit 8 bis 40 Ethylenoxid-Einheiten.

Die Monomere können zur Herstellung der Dispersion alle vorgelegt werden (Batch-Prozess), oder es wird ein Teil der Monomere vorgelegt und der Rest dosiert (Semibatch-Prozess). Das Epoxidharz wird der damit erhaltenen Polymerdispersion vor deren Trocknung zugegeben.

Die mit dem erfindungsgemäßen Verfahren erhältlichen wässrigen Dispersionen haben einen Feststoffgehalt von 30 bis 75 Gew.-%, vorzugsweise von 45 bis 60 Gew.-%.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt, die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-%, bezogen auf den Polymeranteil, eingesetzt.

Geeignete Trocknungshilfen sind beispielsweise teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC. Bevorzugt werden keine weiteren Schutzkolloide als teilverseifte Polyvinylalkohole als Trocknungshilfe eingesetzt.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 300 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Zum Erhalt einer pulverförmigen, vernetzenden und redispergierbaren Polymerpulver-Zusammensetzung kann ein mit dem Epoxidharz vernetzender, pulverförmiger Härter nach der Trocknung des Dispersionspulvers, vorzugsweise unmittelbar nach der Trocknung, mit diesem vermischt werden. Es kann auch so vorgegangen werden, dass das vernetzbare, in Wasser redispergierbare Polymerpulver erst vor dessen Applikation, vorzugsweise unmittelbar vor dessen Applikation, mit dem vernetzenden, pulverförmigen Härter vermischt wird. Denkbar ist auch, dass das vernetzbare, in Wasser redispergierbare Polymerpulver und der pulverförmige Härter getrennt voneinander appliziert werden. Beispielsweise bei der Herstellung einer Trockenmörtel-Zusammensetzung können das vernetzbare, in Wasser redispergierbare Polymerpulver und der pulverförmige Härter getrennt voneinander, gegebenenfalls vorgemischt mit weiteren Rezepturbestandteilen, abgemischt werden.

Bei der Herstellung pastöser Systeme kann beispielsweise auch so vorgegangen werden, dass das mit Epoxidharz modifizierte, vernetzbare, in Wasser redispergierbare Polymerpulver, vor der Applikation, vorzugsweise unmittelbar vor der Applikation, mit flüssigem Härter vermischt wird. Denkbar ist auch, dass das mit Epoxidharz modifizierte, vernetzbare, in Wasser redispergierbare Polymerpulver und der feste oder flüssige Härter erst im Anmachwasser gemischt werden: Beispielsweise der flüssige Härter dem Anmachwasser zugegeben wird und das mit Epoxidharz modifizierte, vernetzbare, in Wasser redispergierbare Polymerpulver und andere feste Rezepturbestahdteile mit diesem Anmachwasser anschließend abgemischt werden. Oder umgekehrt zuerst die festen Bestandteile, wie das mit Epoxidharz modifizierte, vernetzbare, in Wasser redispergierbare Polymerpulver, im Anmachwasser dispergiert werden und dann der flüssige Härter zugegeben wird.

Die vernetzbare, in Wasser redispergierbare Polymerpulver-zusammensetzung kann in den dafür typischen Anwendungsbereichen eingesetzt werden. Beispielsweise in bauchemischen Produkten, gegebenenfalls in Verbindung mit mineralischen Bindemitteln wie Zementen (Portland-, Aluminat-, Trass-, Hütten-, Magnesia-, Phosphatzement), Gips und Wasserglas, wie Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Beschichtungsmittel oder Klebemittel; oder als Beschichtungs- oder Bindemittel für gewebte und nicht-gewebte Textilien und Papier.

Vorzugsweise liegen die bauchemischen Produkte in Form deren Trockenmörtel vor. Typische Rezepturen für Trockenmörtel sind dem Fachmann bekannt. Sie enthalten 0 bis 50 Gew.-%, vorzugsweise 0,05 bis 50 Gew.-% mineralisches Bindemittel, 5 bis 80 Gew.-% Füllstoff, 0,1 bis 10 Gew.-% Polymerpulver-zusammensetzung, 0 bis 30 Gew.-% weitere Zusatzstoffe; jeweils bezogen auf das Gesamtgewicht der Rezeptur und wobei sich die Angaben in Gew.-% in der Rezeptur auf 100 Gew.-% aufaddieren. Geeignete mineralische Bindemittel sind Zement, Gips, Wasserglas oder Kalkhydrat. Beispiele für einsetzbare Füllstoffe sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Lehm und Tone; Quarzmehl, Quarzsand, hochdisperse Kieselsäure, Feldspat, Schwerspat und Leichtspat. Geeignet sind auch Faserfüllstöffe. In der Praxis werden häufig Gemische verschiedener Füllstoffe eingesetzt. Beispiele für weitere Zusatzstoffe sind Pigmente, beispielsweise Titandioxid als anorganisches Pigment, sowie die gebräuchlichen organischen Pigmente. Beispiele für weitere Zusatzstoffe sind Netzmittel in Anteilen von im allgemeinen 0,1 bis 0,5 Gew.-%, bezogen auf das Gesamtgewicht der Rezeptur. Beispiele hierfür sind Natrium- und Kaliumpolyphosphate, Polyacrylsäuren und deren Salze. Als Zusatzstoffe sind auch Verdickungsmittel zu nennen, welche im allgemeinen in einer Menge von 0,01 bis 2,0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Luftporenbildner, Verflüssiger, Verzögerer, Beschleuniger, Gefrierschutzmit tel.

Zur Herstellung der anwendungsfertigen Baustoffmassen wird der mit der vernetzbaren, in Wasser redispergierbaren Polymerpulver-Zusammensetzung vergütete Trockenmörtel an der Baustelle mit der erforderlichen Menge Wasser angerührt.

Bevorzugt ist die Verwendung in bauchemischen Produkten, welche nur einen sehr geringen Anteil von 0,05 bis 10 Gew.-%, besonders bevorzugt 0,05 bis 3 Gew.-% an mineralischen Bindemitteln, wie Zement, enthalten, wobei bei diesen Anteilen das mineralische Bindemittel vorwiegend zur Bindung des Wassers bei der Aushärtung des Mörtels und nicht ausschließlich zur Abbindung des Baustoffes Verwendung findet. Am meisten bevorzugt ist die Verwendung in bauchemischen Produkten, welche keine mineralischen Bindemittel, insbesondere keinen Zement, enthalten: Beispielsweise die Verwendung in, vorzugsweise zementfreien und pulverförmigen, Reaktionsharz-Fügenmörteln. Die Standard-Rezeptur für solche Fugenmörtel enthält im Allgemeinen 50 bis 80 Gew.-% Füllstoffe, wie Sand und/oder Calciumcarbonat, und 20 bis 50 Gew.-% der vernetzbaren und in Wasser redispergierbaren Polymerpulver-Zusammensetzung inklusive Härter, sowie gegebenenfalls die genannten Zusatzstoffe.

Die erfindungsgemäße, vernetzbare und in Wasser redispergierbare Polymerpulver-Zusammensetzung zeichnet sich gegenüber dem Stand der Technik dadurch aus, dass aufgrund des festen Aggregatzustandes auch in Anwesenheit beider Vernetzerkomponenten (Epoxid und Härter) keine vorzeitige Vernetzung auftritt und diese Mischungen folglich über einen langen Zeitraum stabil und lagerfähig bleiben. Trotz der Vernetzerkomponenten im Dispersionspulver bleibt die Redispergierbarkeit voll erhalten. Nach Redispergierung in Wasser erhält man ein rasch abbindendes Vernetzersystem, welches zu Filmen mit hoher mechanischer Festigkeit führt. Im Baubereich werden damit Produkte, beispielsweise ausgehärtete Klebemörtel und Putze, erhalten, welche sich, auch ohne den Zusatz von mineralischen Bindemitteln, durch höhe Reißfestigkeit auszeichnen. Mit der erfindungsgemäßen, vernetzbaren und in Wasser redispergierbaren Polymerpulver-Zusammensetzung werden auch Produkte erhalten, welche hohe Oberflächenhärte aufweisen, beispielsweise in ausgehärteten Fugenmörteln.

Die nachfolgenden Beispiele dienen der weiteren Erläuterung der Erfindung:

### Vergleichsbeispiel 1:

In einem Rührautoklaven wurden 67 Gew.-Teile entionisiertes Wasser, 25 Gew.-Teile einer 20 Gew.-%-igen wässrigen Lösung eines hydrophoben, teilverseiften Polyvinylalkohols, sowie 25 Gew.-Teile einer 20 Gew.-%-igen wässrigen Lösung eines teilverseiften Polyvinylalkohols vorgelegt. Der pH-Wert wurde mit 10 Gew.-%-iger Ameisensäure auf pH = 4 eingestellt. Die Monomervorlage aus 25 Gew.-Teilen n-Butylacrylat und 25 Gew.-Teilen Styrol wurde unter Rühren und über einen Zeitraum von.30 min bei 30°C zudosiert. 7 Gew.-Teile einer 1 %-igen wässrigen Lösung von t-Butylhydroperoxid und 7 Gew.-Teile einer 1,5 Gew.-%-igen wässrigen Lösung von Na-formaldehydsulfoxylat wurden über 300 min zudosiert. Bei erkennbarem Reaktionsstart wurde der Ansatz innerhalb von 45 min auf 70°C erhitzt. 40 min nach Reaktionsbeginn wurde eine Lösung aus 25 Gew.-Teilen n-Butylacrylat, 25 Gew.-Teilen Styrol und 16 Gew.-Teilen Epoxidharz (Epilox F 17-00, Bisphenol-F-Harz der Fa. Leuna Harze) über einen Zeitraum von 150 min dosiert. Die Initiatordosierung wurde nach Ende der Monomerdosierung noch 120 min weitergeführt.

200 Gew.-Teile der Dispersion (Festgehalt ca. 50 %) wurden mit 100 Gew.-Teilen einer 10 %-igen wässrigen Lösung eines teilverseiften Polyvinylalkohols, 0,2 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.

Das erhaltene trockene Pulver wurde mit 10 Gew.-% handelsüblichem Antiblockmittel (Gemisch aus Calcium-Carbonat und Kaolin) versetzt.

### Vergleichsbeispiel 2:

Die Herstellung der Dispersion erfolgte analog Vergleichsbeispiel 1, aber ohne Zugabe eines Epoxidharzes. Alle anderen Maßnahmen entsprachen Vergleichsbeispiel 1.

### Beispiel 3:

Die Herstellung der Dispersion erfolgte analog Vergleichsbeispiel 1, aber mit Zugabe des Epoxidharzes vor der Trocknung, und nicht während Polymerisation.

200 Gew.-Teile der Dispersion wurden mit 35 Gew.-Teilen einer 20 %-igen wässrigen Lösung eines teilverseiften Polyvinylalkohols mit einer Höppler-Viskosität von 4 mPas und einem Hydrolysegrad von 88 Möl-%, mit 30 Gew.-Teilen einer 11 %-igen wässrigen Lösung eines teilverseiften Polyvinylalkohols mit einer Höppler-Viskosität von 13 mPas und einem Hydrolysegrad von 88 Mol-%, mit 0,2 Gew.-Teilen Entschäumer, mit 16 Gew.-Teilen Epoxidharz (Epilox F 17-00) und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.

Das erhaltene trockene Pulver wurde mit 12 Gew.-% handelsüblichem Antiblockmittel (Gemisch aus Calcium-Carbonat und Kaolin) versetzt.

### Vergleichsbeispiel 4:

Die Herstellung der Dispersion erfolgte analog Vergleichsbeispiel 1 mit dem Unterschied, dass vor der Trocknung der Dispersion noch zusätzlich 16 Gew. -Teile Epoxidharz (Epilox F 17-00, Bisphenol-F-Harz der Fa. Leuna Harze) der Dispersion zugegeben wurden.

### Prüfung der Polymerpulver:

Bestimmung des Absitzverhaltens der Pulver (Röhrenabsitz): Zur Bestimmung des Absitzverhaltens wurden jeweils 50 g des Dispersionspulvers in 50 ml Wasser redispergiert, danach auf 0,5 % Festgehalt verdünnt und die Absitzhöhe an Feststoff von 100 ml dieser Redispersion in eine graduierte Röhre gefüllt und das Absetzen nach 1 Stunde und 24 Stunden gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert: 1 = sehr gute Blockstabilität; 2 = gute Blockstabilität 3 = befriedigende Blockstabilität; 4 = nicht blockstabil, Pulver nach Zerdrücken nicht mehr rieselfähig.

**Tabelle 1:**

| Beispiel | Röhrenabsitz | Blockfestigkeit |
|---|---|---|
| | 1 h / 24 h [mm] | |
| V.beispiel 1 | 0,2 / 0,6 | 2 |
| V.beispiel 2 | 0,2 / 0,5 | 2 |
| Beispiel 3 | 0,3 / 0,7 | 2 |
| V.beispiel 4 | 0,4 / 0,8 | 2 |

Die Ergebnisse in Tabelle 1 zeigen, dass die erfindungsgemäßen vernetzbaren Dispersionspulver über hervorragende Redispergierbarkeit verfügen, welche sich nicht von herkömmlichen Dispersionspulvern (Vergleichsbeispiel 2 ohne Epoxidharz) unterscheidet.

### Anwendungstechnische Prüfung:

Zur Bestimmung der Filmfestigkeit wurde ein 50 %-ige Redispersion des Pulvers aus Vergleichsbeispiel 1 hergestellt und mit den angegebenen Härtern im angegebenen molaren Mischungsverhältnis abgemischt. Die getrockneten Filme wurden in einem Zugversuch nach DIN 53504 ausgeprüft. Die vernetzten Filme waren nach 7 Tagen Wasserlagerung unzerstört, hingegen war der unvernetzte Film redispergiert. Die Ergebnisse sind in Tabelle 2 zusammengefasst. Die Ergebnisse zeigen, dass die Filme wirksam vernetzen. Dies beweist, dass die vernetzbare, mit Epoxidharz modifizierte Polymerpulver-Zusammensetzung, trotz Epoxidharz-Anteil, sehr gut redispergiert. Weiter wird damit gezeigt, dass die Epoxidfunktionen für den Aminvernetzer frei zugänglich sind, und nicht etwa durch Einschluß in eine Polymermatrix desaktiviert sind.

Analog wurden die Dispersionspulver aus Beispiel 3 und Vergleichsbeispiel 4 getestet. Die Ergebnisse sind in Tabelle 4 und 5 zusammengefasst.

Mit den in Tabelle 4 (Beispiel 3) angegebenen Zusammensetzungen wurde dann noch ein 50 %-ige Redispersion des Pulvers hergestellt und mit dem angegebenen Härtern im angegebenen molaren Mischungsverhaltnis abgemischt. Die getrockneten Filme wurden anschließend drei Tage in Wasser gelagert und dann erst in einem Zugversuch nach DIN 53504 ausgeprüft. Der Referenzfilm ohne Härter war nach dieser Zeit redispergiert und konnte nicht mehr ausgeprüft werden. Der Film auf Basis der Mischung mit Molverhältnis Epoxid/Amin = 0,8 zeigte naß gemessen eine Reißfestigkeit von 9,7 MPa, und der Film auf Basis der Mischung mit Molverhältnis Epoxid/Amin = 1,2 zeigte naß gemessen eine Reißfestigkeit von 5,1 MPa.

In einer weiteren Testreihe wurden mit Sand gefüllte Systeme getestet. Das Pulver aus Vergleichsbeispiel 1 wurde in einem Gewictitsverhältnis von 1 : 2 mit Sand (BCS 413, mittlere Korngröße 130 µm) vermischt, mit den angegebenen Härtern im angegebenen molaren Mischungsverhältnis abgemischt und redispergiert. Die getrockneten Filme wurden in einem Zugversuch nach DIN 53504 ausgeprüft. Auch diese Filme waren nach 7 Tagen Wasserlagerung unzerstört, hingegen war der unverletzte Film redispergiert. Die Ergebnisse sind in Tabelle 3 zusammengefasst.

**Tabelle 2 (Vergleichsbeispiel 1):**

| Härter | Molverhältnis Epoxid/Amin | Reißfestigkeit [MPa] |
|---|---|---|
| Anquamine 401 | 0,8 | 12,3 |
| | 1,2 | 12,2 |
| | 1,5 | 1.0, 9 |
| Epilink 701 | 0,8 | 10,4 |
| | 1,2 | 10,3 |
| | 1,5 | 10,9 |
| Jeffamine EDR-104 | 0,8 | 9,7 |
| | 1,2 | 12,9 |
| Jeffamine EDR-176 | 0,8 | 11,6 |
| | 1,2 | 12,8 |
| Epilox H10-32 | 0,8 | 11,9 |
| | 1,2 | 11,4 |
| Polyimin P | 0,8 | 9,6 |
| | 1,2 | 8,8 |
| Geniosil GF 91 | 0,8 | 11,5 |
| | 1,2 | 10,0 |
| Geniosil GF 93 | 0,8 | 9,9 |
| | 1,2 | 7,7 |
| Geniosil GF 95 | 0,8 | 16,5 |
| | 1,2 | 15, 9 |
| Referenz | ohne Härter | 7,1 |

**Tabelle 3 (Vergleichsbeispiel 1):**

| Härter | Mischungsverhältnis Epoxid/Amin | Reißfestigkeit [MPa] |
|---|---|---|
| Anquamine 401 | 1,2 | 1,4 |
| Geniosil GF 95 | 1,2 | 7,2 |
| Anquamine 401 auf Sipernat 22 | 1,2 | 2,1 |
| Geniosil GF 91 auf Sipernat 22 | 1,2 | 4,6 |
| Referenz | ohne Härter | 0,8 |

**Tabelle 4 (Beispiel 3):**

| Härter | Molverhältnis Epoxid/Amin | Reißfestigkeit [MPa] |
|---|---|---|
| Epilink 701 | 0,8 | 10,3 |
| | 1,2 | 9,7 |
| Referenz | ohne Härter | 7,1 |

**Tabelle 5 (Vergleichsbeispiel 4):**

| Harter | Molverhältnis Epoxid/Amin | Reißfestigkeit [MPa] |
|---|---|---|
| Epilink 701 | 0,8 | 15,7 |
| | 1,2 | 13,3 |
| Referenz | ohne Härter | 5,6 |

## Patentansprüche

1. Vernetzbare, in Wasser redispergierbare Polymerpulver-Zusammensetzungen erhältlich mittels radikalisch initiierter Polymerisation in wässrigem Medium von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, wobei keine epoxidfunktionellen Comonomere copolymerisiert werden, und anschließender Trocknung der dabei erhaltenen Polymerdispersion, **dadurch gekennzeichnet, dass** vor der Trocknung der damit erhaltenen Polymerdispersion, ein Epoxidharz zugegeben wird, und gegebenenfalls nach der Trocknung ein mit dem Epoxidharz vernetzender Härter zugegeben wird.

2. Vernetzbare, in Wasser redispergierbare Polymerpulver-Zusammensetzungen nach Anspruch 1, **dadurch gekennzeichnet, dass** ein mit dem Epoxidharz vernetzender, pulverförmiger Härter nach der Trocknung der vernetzbaren, in Wasser redispergierbaren Polymerpulver-Zusammensetzung mit dieser vermischt wird.

3. Vernetzbare, in Wasser redispergierbare Polymerpulver-Zusammensetzungen nach Anspruch 1, **dadurch gekennzeichnet, dass** ein mit dem Epoxidharz vernetzender, pulverförmiger Härter erst vor deren Applikation zumischt wird.

4. Vernetzbare, in Wasser redispergierbare Polymerpulver-Zusammensetzungen nach Anspruch 1 bis 3, **dadurch gekennzeichnet, dass** als Härter ein mit dem Epoxidharz vernetzendes Amin eingesetzt wird.

5. Vernetzbare, in Wasser redispergierbare Polymerpulver-Zusammensetzungen nach Anspruch 4, **dadurch gekennzeichnet, dass** als Amine solche mit zwei oder mehr Aminogruppen, aus der Gruppe umfassend aliphatische Polyamine, Polyoxyalkylenamine, Polyethylenimine, Aminosilane und deren Kondensationsprodukte, aminofunktionelle Polyvinylalkohole, eingesetzt werden.

6. Vernetzbare, in Wasser redispergierbare Polymerpulver-Zusammensetzungen nach Anspruch 1 bis 5, **dadurch gekennzeichnet, dass** das Basispolymerisat mittels Polymerisation von Vinylacetat, oder Mischpolymerisation von Vinylacetat mit Ethylen, oder Mischpolymerisation von Vinylacetat mit Ethylen und einem öder mehreren weiteren Vinylestern wie Vinylversatat oder Vinyllaurat, oder Mischpolymerisation von Vinylchlorid mit Ethylen, oder Mischpolymerisation von Vinylchlorid und Ethylen und einem oder mehreren Vinylestern wie Vinylacetat und Vinyllaurat, oder Mischpolymerisation von Vinylacetat mit Ethylen und einem oder mehreren Acrylsäureestern, oder Homo- und Mischpolymerisation von (Meth)acrylsäureestern, oder Mischpolymerisation von Styrol mit einem oder mehreren Acrylsäureestern, oder Mischpolymerisation von Styrol mit 1,3-Butadien, erhalten wird, wobei gegebenenfalls jeweils noch Hilfsmonomere copolymerisiert werden können.

7. Verfahren zur Herstellung der vernetzbaren, in Wasser redispergierbaren Polymerpulver-Zusammensetzungen nach Anspruch 1 bis 6 mittels radikalisch initiierter Emulsionspolymerisation oder Suspensionspolymerisation.

8. Verwendung der vernetzbaren, in Wasser redispergierbaren Polymerpulver-Zusammensetzung nach Anspruch 1 bis 6 in bauchemischen Produkten.

9. Verwendung der vernetzbaren, in Wasser redispergierbaren Polymerpulver-Zusammensetzung nach Anspruch 1 bis 6 als Bindemittel für Beschichtungsmittel oder Klebemittel, oder als Beschichtungs- oder Bindemittel für gewebte und nicht-gewebte Textilien und Papier.

10. Verwendung nach Anspruch 8 für die Herstellung von Bauklebern, Putzen, Spachtelmassen, Fußbodenspachtelmassen, Verlaufsmassen, Dichtschlämmen, Fugenmörtel und Farben.

11. Verwendung nach Anspruch 8 oder 10 in Trockenmörtel-Zusammensetzungen.

12. Verwendung nach Anspruch 8, 10 oder 11 **dadurch gekennzeichnet, dass** 0,05 bis 10 Gew.-% an mineralischen Bindemitteln enthalten sind.

13. Verwendung nach Anspruch 8, 10 oder 11 **dadurch gekennzeichnet, dass** keine mineralischen Bindemittel enthalten sind.

14. Verwendung nach Anspruch 12 oder 13 in Reaktionsharz-Fugenmörteln.

15. Verwendung nach Anspruch 8 bis **14, dadurch gekennzeichnet, dass** bei der Herstellung einer Trocken-zusammensetzung die vernetzbare, in Wasser redispergierbare Polymerpulver-Zusammensetzung und der pulverförmige Härter getrennt voneinander, gegebenenfalls vorgemischt mit weiteren Rezepturbestandteilen, abgemischt werden.

16. Verwendung nach Anspruch 8 bis 14, **dadurch gekennzeichnet, dass** bei der Herstellung einer pastösen Zusammensetzung die vernetzbaren, in Wasser redispergierbare Polymerpulver-Zusammensetzung vor der Applikation mit flüssigem Härter vermischt wird, oder das vernetzbare, in Wasser redispergierbare Polymerpulver, und der Härter erst im Anmachwasser gemischt werden.

## Claims

1. Crosslinkable polymer powder composition redispersible in water, obtainable by means of free radical polymerization, in an aqueous medium, of one or more monomers from the group consisting of vinyl esters of straight-chain or branched alkylcarboxylic acids having 1 to 15 C atoms, methacrylates and acrylates of alcohols having 1 to 15 C atoms, vinylaromatics, olefins, dienes and vinyl halides, no epoxide-functional comonomers being copolymerized, and subsequent drying of the polymer dispersion obtained thereby, **characterized in that**, before the drying of the polymer dispersion obtained thereby, an epoxy resin is added and, if appropriate after the drying, a curing agent crosslinking with the epoxy resin is added.

2. Crosslinkable polymer powder composition redispersible in water, according to Claim 1, **characterized in that** a pulverulent curing agent crosslinking with the epoxy resin is mixed with the crosslinkable polymer powder composition redispersible in water after the drying of said composition.

3. Crosslinkable polymer powder composition redispersible in water, according to Claim 1, **characterized in that** a pulverulent curing agent crosslinking with the epoxy resin is admixed only before application thereof.

4. Crosslinkable polymer powder composition redispersible in water, according to Claims 1 to 3, **characterized in that** the curing agent used is an amine crosslinking with the epoxy resin.

5. Crosslinkable polymer powder composition redispersible in water, according to Claim 4, **characterized in that** the amines used are those having two or more amino groups, from the group consisting of aliphatic polyamines, polyoxyalkyleneamines, polyethyleneimines, aminosilanes and the condensates thereof, aminofunctional polyvinyl alcohols.

6. Crosslinkable polymer powder composition redispersible in water, according to Claims 1 to 5, **characterized in that** the base polymer is obtained by means of polymerization of vinyl acetate or copolymerization of vinyl acetate with ethylene or copolymerization of vinyl acetate with ethylene and one or more further vinyl esters, such as vinyl versatate or vinyl laurate, or copolymerization of vinyl chloride with ethylene or copolymerization of vinyl chloride and ethylene and one or more vinyl esters, such as vinyl acetate and vinyl laurate, or copolymerization of vinyl acetate with ethylene and one or more acrylates, or homo- and copolymerization of (meth)acrylates, or copolymerization of styrene with one or more acrylates or copolymerization of styrene with 1,3-butadiene, it also being possible, if appropriate, to copolymerize auxiliary monomers in each case.

7. Process for the preparation of the crosslinkable polymer powder compositions redispersible in water, according to Claims 1 to 6, by means of free radical emulsion polymerization or suspension polymerization.

8. Use of the crosslinkable polymer powder composition redispersible in water, according to Claims 1 to 6, in construction chemistry products.

9. Use of the crosslinkable polymer powder composition redispersible in water, according to Claims 1 to 6, as a binder for coating materials or adhesives, or as a coating material or binder for woven and nonwoven textiles and paper.

10. Use according to Claim 8 for the production of construction adhesives, renders, filling compounds, floor filling compounds, levelling compounds, slurry-type seal coatings, joint mortars and paints.

11. Use according to Claim 8 or 10 in dry mortar compositions.

12. Use according to Claim 8, 10 or 11, **characterized in that** from 0.05 to 10% by weight of mineral binders are present.

13. Use according to Claim 8, 10 or 11, **characterized in that** no mineral binders are present.

14. Use according to Claim 12 or 13 in reactive resin joint mortars.

15. Use according to Claims 8 to 14, **characterized in that**, in the preparation of a dry composition, the crosslinkable polymer powder composition redispersible in water and the pulverulent curing agent are mixed separately from one another, optionally premixed with further constituents of the formulation.

16. Use according to Claims 8 to 14, **characterized in that**, in the preparation of a pasty composition, the crosslinkable polymer powder composition redispersible in water is mixed with liquid curing agent prior to application, or the crosslinkable polymer powder redispersible in water and the curing agent are mixed only in the mixing water.

## Revendications

1. Compositions pulvérulentes polymères réticulables redispersibles dans l'eau pouvant être obtenues par polymérisation initiée par voie radicalaire en milieu aqueux d'un ou de plusieurs monomères du groupe comprenant les esters de vinyle d'acides alkylcarboxyliques non ramifiés ou ramifiés de 1 à 15 atomes C, les esters de l'acide méthacrylique et les esters de l'acide acrylique d'alcools de 1 à 15 atomes C, les composés aromatiques de vinyle, les oléfines, les diènes et les halogénures de vinyle, aucun comonomère à fonction époxyde n'étant copolymérisé, puis séchage de la dispersion polymère ainsi obtenue, **caractérisées en ce qu'**avant le séchage de la dispersion polymère ainsi obtenue, une résine époxyde est ajoutée et, éventuellement après le séchage, un agent de durcissement réticulant avec la résine époxyde est ajouté.

2. Compositions pulvérulentes polymères réticulables redispersibles dans l'eau selon la revendication 1, **caractérisées en ce qu'**un agent de durcissement pulvérulent, réticulant avec la résine époxyde, est mélangé avec la composition pulvérulente polymère réticulable redispersible dans l'eau après le séchage de celle-ci.

3. Compositions pulvérulentes polymères réticulables redispersibles dans l'eau selon la revendication 1, **caractérisées en ce qu'**un agent de durcissement pulvérulent, réticulant avec la résine époxyde, n'est incorporé qu'avant leur application.

4. Compositions pulvérulentes polymères réticulables redispersibles dans l'eau selon les revendications 1 à 3, **caractérisées en ce qu'**une amine réticulant avec la résine époxyde est utilisée en tant qu'agent de durcissement.

5. Compositions pulvérulentes polymères réticulables redispersibles dans l'eau selon la revendication 4, **caractérisées en ce que** des amines contenant deux groupes amino ou plus, du groupe comprenant les polyamines aliphatiques, les polyoxyalkylène-amines, les polyéthylène-imines, les aminosilanes et leurs produits de condensation, les alcools polyvinyliques à fonction amino, sont utilisées en tant qu'amines.

6. Compositions pulvérulentes polymères réticulables redispersibles dans l'eau selon les revendications 1 à 5, **caractérisées en ce que** le polymère de base est obtenu par polymérisation d'acétate de vinyle, ou par copolymérisation d'acétate de vinyle avec de l'éthylène, ou par copolymérisation d'acétate de vinyle avec de l'éthylène et un ou plusieurs esters de vinyle supplémentaires tels que le versatate de vinyle ou le laurate de vinyle, ou par copolymérisation de chlorure de vinyle avec de l'éthylène, ou par copolymérisation de chlorure de vinyle avec de l'éthylène et un ou plusieurs esters de vinyle tels que l'acétate de vinyle et le laurate de vinyle, ou par copolymérisation d'acétate de vinyle avec de l'éthylène et un ou plusieurs esters de l'acide acrylique, ou par homo- et copolymérisation d'esters de l'acide (méth)acrylique, ou par copolymérisation de styrène avec un ou plusieurs esters de l'acide acrylique, ou par copolymérisation de styrène avec du 1,3-butadiène, des monomères auxiliaires pouvant éventuellement également être copolymérisés à chaque fois.

7. Procédé de fabrication des compositions pulvérulentes polymères réticulables redispersibles dans l'eau selon les revendications 1 à 6 par polymérisation en émulsion ou polymérisation en suspension initiée par voie radicalaire.

8. Utilisation de la composition pulvérulente polymère réticulable redispersible dans l'eau selon les revendications 1 à 6 dans des produits chimiques de construction.

9. Utilisation de la composition pulvérulente polymère réticulable redispersible dans l'eau selon les revendications 1 à 6 en tant que liant pour agent de revêtement ou adhésif, ou en tant qu'agent de revêtement ou liant pour textiles tissés et non tissés et papier.

10. Utilisation selon la revendication 8 pour la fabrication de colles de construction, d'enduits, de mastics, de mastics pour planchers, de masses d'écoulement, de pâtes d'étanchéité, de mortiers de jointoiement et de peintures.

11. Utilisation selon la revendication 8 ou 10 dans des compositions de mortiers secs.

12. Utilisation selon la revendication 8, 10 ou 11, **caractérisée en ce que** 0,05 à 10 % en poids de liants minéraux sont contenus.

13. Utilisation selon la revendication 8, 10 ou 11, **caractérisée en ce qu'**aucun liant minéral n'est contenu.

14. Utilisation selon la revendication 12 ou 13 dans des mortiers de jointoiement à base de résine réactive.

15. Utilisation selon les revendications 8 à 14, **caractérisée en ce que** lors de la fabrication d'une composition sèche, la composition pulvérulente polymère réticulable redispersible dans l'eau et les agents de durcissement pulvérulents sont mélangés séparément l'un de l'autre, éventuellement prémélangés avec d'autres constituants de la formulation.

16. Utilisation selon les revendications 8 à 14, **caractérisée en ce que** lors de la fabrication d'une composition pâteuse, la composition pulvérulente polymère réticulable redispersible dans l'eau est mélangée avec un agent de durcissement liquide avant l'application, ou la poudre polymère réticulable redispersible dans l'eau et les agents de durcissement ne sont mélangés que dans l'eau de mélange.
